# EUROPEAN PATENT APPLICATION

(11) **EP 4 844 529 A1**
(43) Date of publication of application: **25.11.2026**
(21) Application number: 25790532.3
(22) Date of filing: 27.02.2025
(51) Int. Cl.: G06F 1/16, C09J 9/00

(54) **ELECTRONIC DEVICE COMPRISING WATERPROOF MEMBERS, AND METHOD FOR MANUFACTURING HOUSING**

(30) Priority: 18.04.2024 KR 20240052414; 08.05.2024 KR 20240060875
(71) Applicant: Samsung Electronics Co., Ltd., Suwon-si, Gyeonggi-do 16677 (KR)
(72) Inventor: LEE, Shinhyung, Suwon-si Gyeonggi-do 16677 (KR); CHOI, Jongchul, Suwon-si Gyeonggi-do 16677 (KR)
(74) Representative: Gulde & Partner
(86) International application number: PCT/KR2025/002771
(87) International publication number: WO 2025/220872

(57) **Abstract**

An electronic device is disclosed. The electronic device comprises: a cover defining the rear surface of the electronic device; a frame supporting the cover; and waterproof members disposed along an edge portion of the cover and attaching the cover and the frame, wherein the waterproof members may comprise: a first waterproof member including a first adhesive and a first base material interposed in the first adhesive; a second waterproof member spaced apart from the first waterproof member, and including a second adhesive and a second base material interposed in the second adhesive; and a third waterproof member connecting the first waterproof member and the second waterproof member, and including a third adhesive contacting the first adhesive and the second adhesive, and a third base material interposed in the third adhesive and spaced apart from the first base material and the second base material.

## Description

### [Technical Field]

The present disclosure relates to an electronic device including a waterproof member, and a method for manufacturing a housing.

### [Background Art]

For waterproofing and dustproofing of an electronic device, an internal space of the electronic device may be isolated from the outside. The electronic device may include a sealing member that fills an assembly portion or a spaced-apart portion of a housing to isolate the internal space from the outside.

### [Disclosure]

### [Technical Solution]

An electronic device may comprise a cover defining a rear side of the electronic device. The electronic device may comprise a frame supporting the cover. The electronic device may comprise waterproof members disposed along an edge portion of the cover and attaching the cover and the frame. The waterproof members may include a first waterproof member including a first adhesive and a first substrate interposed between the first adhesive, a second waterproof member spaced apart from the first waterproof member and including a second adhesive and a second substrate interposed between the second adhesive, and a third waterproof member connecting the first waterproof member and the second waterproof member and including a third adhesive contacting the first adhesive and the second adhesive and a third substrate interposed between the third adhesive and spaced apart from the first substrate and the second substrate.

A housing manufacturing method may comprise attaching a first waterproof member to a first portion of an edge of a cover and attaching a second waterproof member to a second portion of the edge of the cover spaced apart from the first portion of the edge of the cover. The housing manufacturing method may further comprise attaching the third waterproof member to a first portion of a sidewall of a frame and attaching a fourth waterproof member to a second portion of the sidewall of the frame spaced apart from the first portion of the sidewall of the frame.

The housing manufacturing method may comprise arranging the cover and the frame such that the first waterproof member attached to the second portion of the edge of the cover at least partially overlays with the second waterproof member attached to the first portion of the sidewall of the frame, and connecting the first waterproof member and the fourth waterproof member by filling a gap formed between the first portion of the edge of the cover and the second portion of the edge of the cover and filling a gap formed between the first portion of the sidewall of the frame and the second portion of the sidewall of the frame with an adhesive in the second waterproof member and an adhesive in the third waterproof member, based on depressing the arranged frame relative to the arranged cover.

A housing manufacturing method may comprise coating a first waterproof member on a base material of a first waterproof tape, and the first waterproof member may include a first adhesive and a first substrate embedded in the first adhesive. The housing manufacturing method may comprise coating a second waterproof member on the base material of the first waterproof tape such that the second waterproof member is positioned close to the first waterproof member, and the second waterproof member may include a second adhesive and a second substrate embedded in the second adhesive. The housing manufacturing method may comprise forming the first waterproof tape by cutting the base material of the first waterproof tape coated with the first waterproof member and the second waterproof member. The housing manufacturing method may comprise coating the first waterproof member on a base material of a second waterproof tape, and coating the second waterproof member on the base material of the second waterproof tape such that the second waterproof member is positioned close to the first waterproof member. The housing manufacturing method may comprise forming the second waterproof tape by cutting the base material of the second waterproof tape coated with the first waterproof member and the second waterproof member, attaching the first waterproof tape along a portion of an edge portion of a cover of the housing, and attaching the second waterproof tape along a portion of an edge portion of a frame of the housing. The housing manufacturing method may comprise disposing a surface of the cover of the housing coated with the first waterproof tape to face a surface of the frame of the housing coated with the second waterproof tape such that a portion of the edge portion of the frame of the housing is adjacent to a portion of the edge portion of the cover of the housing. The housing manufacturing method may comprise pressing the cover of the housing and the frame of the housing against each other such that the second adhesive flows into a space between the first substrate of the first waterproof tape and the second substrate of the first waterproof tape and a space between the first substrate of the first waterproof tape and the second substrate of the second waterproof tape.

### [Description of the Drawings]

FIG. 1 is a perspective view illustrating an exterior of an electronic device.
FIG. 2 is an exploded perspective view of an electronic device.
FIG. 3 is a view illustrating a cover, a frame, and adhesive members of a housing.
FIG. 4 is a view illustrating an arrangement of adhesive members in a housing.
FIG. 5 illustrates an arrangement for assembly of a cover to which adhesive members are attached and a frame to which adhesive members are attached.
FIG. 6 illustrates an arrangement of adhesive members between a cover and a frame in a state in which a housing is assembled.
FIG. 7 illustrates an example of adhesive members disposed between a cover and a frame in a state in which a housing is assembled.
FIG. 8 is a flowchart illustrating a manufacturing process of a waterproof member used for assembly of a housing.
FIG. 9 is a flowchart illustrating a manufacturing process of a housing.
FIG. 10A, FIG. 10B, and FIG. 10C are conceptual diagrams illustrating a manufacturing process of a waterproof member.
FIG. 11 is a block diagram of an electronic device in a network environment according to an embodiment.

### [Mode for Invention]

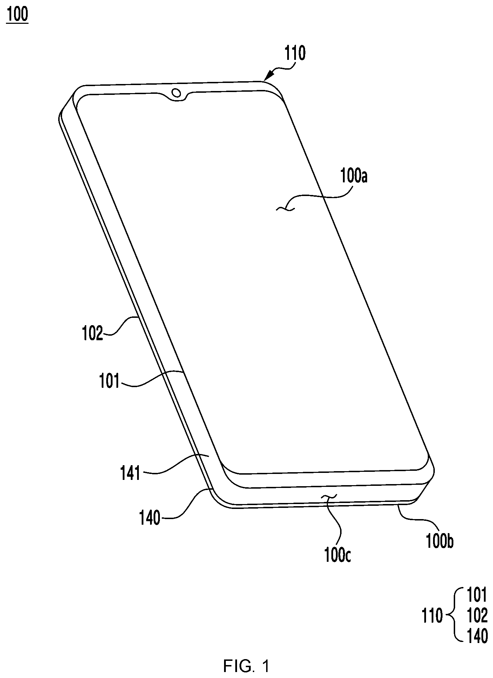

FIG. 1 is a perspective view illustrating an exterior of an electronic device.

Referring to FIG. 1, an electronic device 100 according to an embodiment may include a housing 110 forming an exterior of the electronic device 100. For example, the housing 110 may define a first surface (or a front surface) 100a, a second surface (or a rear surface) 100b, and a third surface (or a lateral surface) 100c surrounding a space between the first surface 100a and the second surface 100b. In an embodiment, the housing 110 may also refer to a structure (e.g., a frame 140) defining at least a portion of the first surface 100a, the second surface 100b, and/or the third surface 100c.

The electronic device 100 according to an embodiment may include a substantially transparent front cover 101. In an embodiment, the front cover 101 may form at least a portion of the first surface 100a. In an embodiment, the front cover 101 may include, for example, a glass plate or a polymer plate including various coating layers, but is not limited thereto.

The electronic device 100 according to an embodiment may include a substantially opaque rear cover 102. In an embodiment, the rear cover 102 may form at least a portion of the second surface 100b. In an embodiment, the rear cover 102 may be formed of coated or colored glass, ceramic, polymer, metal (e.g., aluminum, stainless steel (STS), or magnesium), or a combination of at least two of the materials.

In an embodiment, a sidewall 141 of the frame 140 may be coupled with the front cover 101 and/or the rear cover 102 and form at least a portion of the third surface 100c of the electronic device 100. For example, the sidewall 141 of the frame 140 may form the entire third surface 100c of the electronic device 100, or the sidewall 141 of the frame 140 may form the third surface 100c of the electronic device 100 together with the front cover 101 and/or the rear cover 102.

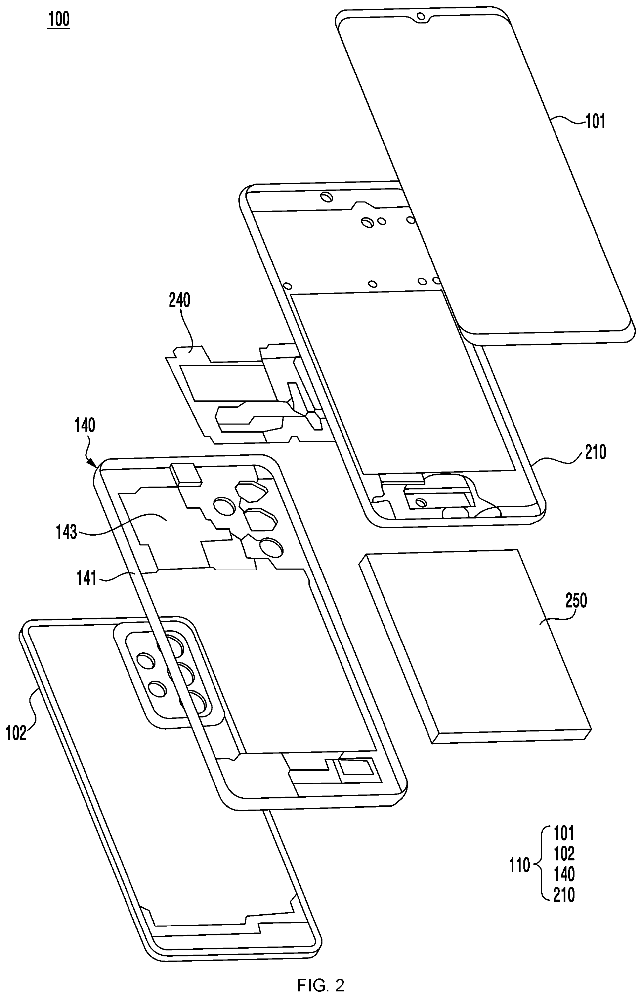

FIG. 2 is an exploded perspective view of an electronic device.

Referring to FIG. 2, an electronic device 100 according to an embodiment may include a housing 110 including a front cover 101, a rear cover 102, a frame 140, and a bracket 210, a printed circuit board 240, and a battery 250.

The frame 140 may include a sidewall 141 defining at least a portion of a lateral side (e.g., a third surface 100c) of the electronic device 100 and a support portion 143 extending from the sidewall 141 toward an inside of the electronic device 100. The frame 140 may be disposed between the front cover 101 and the rear cover 102. The sidewall 141 of the frame 140 may surround a space between the front cover 101 and the rear cover 102.

The bracket 210 may be connected to the sidewall 141 of the frame 140. The bracket 210 may extend from the sidewall 141. The bracket 210 may support components included in the electronic device 100. The front cover 101 (or a display) may be disposed on a surface of the bracket 210, and the front cover 101 may be supported by the bracket 210. The printed circuit board 240, the battery 250, and other components may be disposed on another surface of the bracket 210. The printed circuit board 240, the battery 250, and the other components may be respectively seated in recesses defined by the bracket 210.

Although the frame 140 has been described as including the sidewall 141 and the support portion 143, the bracket 210 may include at least a portion of the sidewall 141. For example, the bracket 210 may include a sidewall defining a portion of the lateral surface 100c, and the frame 140 may include a sidewall defining another portion of the lateral surface 100c. In an embodiment, the bracket 210 may include a sidewall defining the entire lateral surface 100c. Although the bracket 210 and the frame 140 are illustrated as separate configurations, it is not limited thereto. For example, the bracket 210 or the frame 140 may be omitted by being included in another configuration.

The printed circuit board 240, the battery 250, and the other components may be coupled with the support portion 143 of the frame 140 and the bracket 210. For example, the printed circuit board 240 may be fixed to the support portion 143 of the frame 140 and/or the bracket 210 via a coupling member (e.g., a screw). Coupling of the printed circuit board 240 is not limited thereto. The battery 250 may be fixed to the bracket 210 via an adhesive member (e.g., a double-sided tape).

In an embodiment, the battery 250 may supply power to at least one component of the electronic device 100. For example, the battery 250 may include a rechargeable secondary battery, or a fuel cell. At least a portion of the battery 250 may be disposed substantially on the same plane as the printed circuit board 240.

The support portion 143 may be disposed between the printed circuit board 240 and the rear cover 102. For example, the printed circuit board 240 may be disposed on the support portion 143, and the bracket 210 may be disposed on the printed circuit board 240.

The support portion 143 of the frame 140 and the bracket 210 may at least partially overlap with the printed circuit board 240. The support portion 143 of the frame 140 and the bracket 210 may cover at least a portion of the printed circuit board 240. The support portion 143 of the frame 140 and the bracket 210 may reduce transmission of a physical impact or an external force to the printed circuit board 240, and may reduce separation of a connector coupled to the printed circuit board 240. There may be a plurality of printed circuit boards 240. For example, the electronic device 100 may include a printed circuit board disposed at an upper portion of the electronic device 100 and a printed circuit board disposed at a lower portion of the electronic device 100.

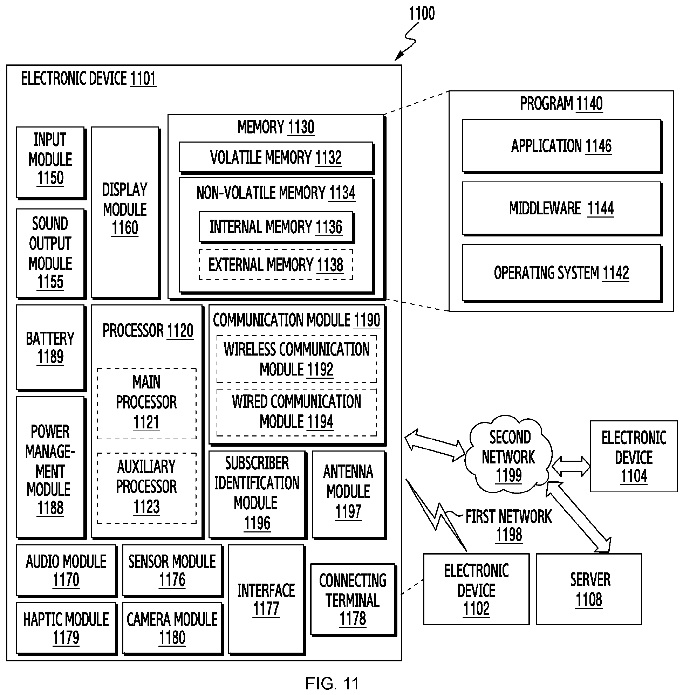

A processor (e.g., a processor 1120 of FIG. 11), memory (e.g., memory 1130 of FIG. 11), and/or an interface (e.g., an interface 1177 of FIG. 11) may be mounted on the printed circuit board 240. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 100 with an external electronic device, and may include a USB connector, an SD card/MMC connector, or an audio connector. In an embodiment, the printed circuit board 240 may be operatively or electrically connected to each other via a connection member (e.g., a flexible printed circuit board).

The housing 110 of the electronic device 100 may indicate a configuration or a structure forming at least a portion of an exterior of the electronic device 100. In this respect, at least a portion of the front cover 101, the rear cover 102, the frame 140, and/or the bracket 210 forming the exterior of the electronic device 100 may be referred to as the housing 110 of the electronic device 100.

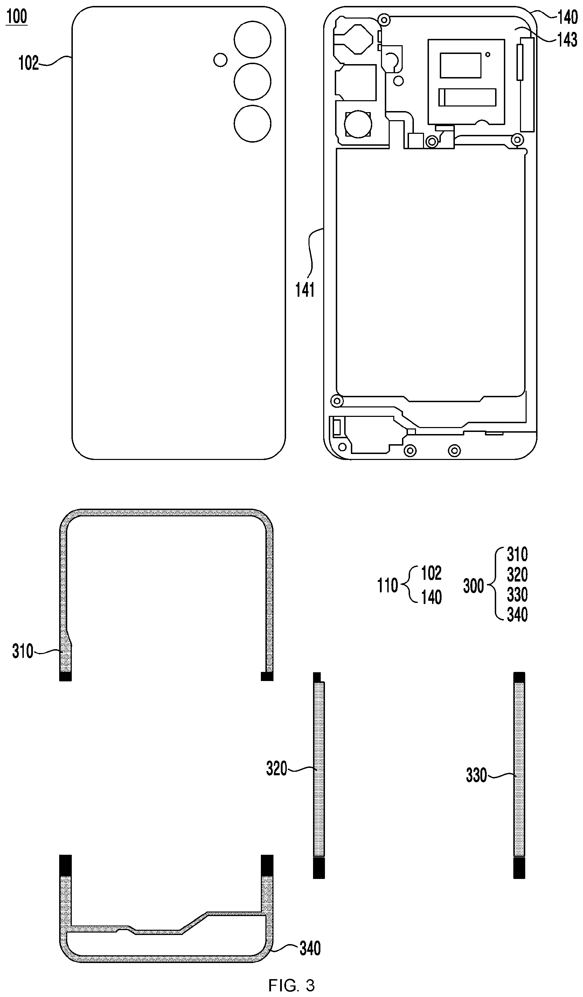

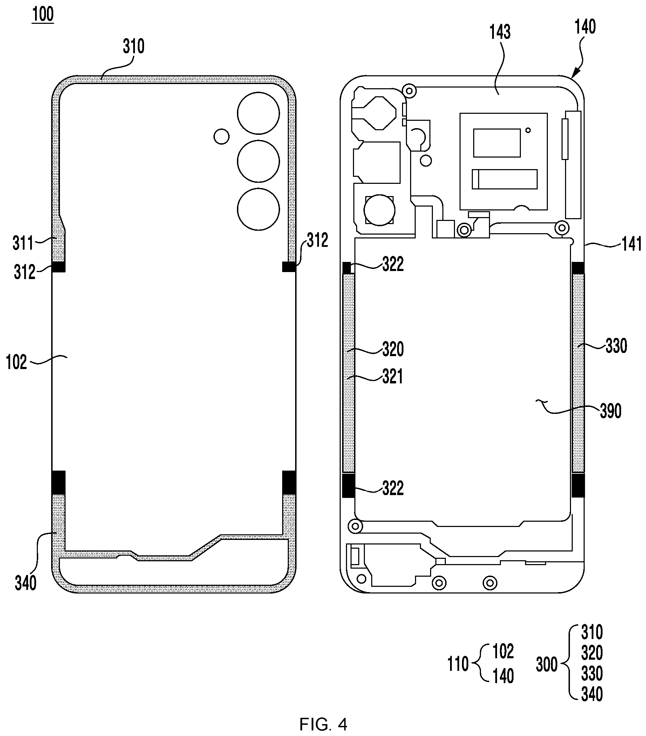

FIG. 3 is a view illustrating a cover, a frame, and adhesive members of a housing. FIG. 4 is a view illustrating an arrangement of adhesive members in a housing.

Referring to FIG. 3, an electronic device 100 may include a housing 110. The housing 110 may include a rear cover 102 and a frame 140. The rear cover 102 may define a rear side 100b of the electronic device 100.

The frame 140 may support the rear cover 102. The frame 140 may include a sidewall 141 and a support portion 143. The sidewall 141 may define at least a portion of a third surface (the third surface 100c of FIG. 1) (or a lateral side) of the electronic device 100. The support portion 143 may extend inward from the sidewall 141 and may support a printed circuit board (e.g., the printed circuit board 240 of FIG. 2). The sidewall 141 may be disposed along an edge of the support portion 143 and may protrude from the support portion 143 toward the rear cover 102. For example, the sidewall 141 may extend from an edge portion of the support portion 143 toward an edge portion of the rear cover 102. The rear cover 102 may be attached to the sidewall 141 of the frame 140 through waterproof members 300. The waterproof members 300 may be disposed along an edge of the rear cover 102 of the housing 110 or the sidewall 141 of the frame 140. The waterproof members 300 may form a closed curve extending along the edge of the rear cover 102 or an edge of the frame 140 when the housing 110 is assembled.

A plurality of waterproof tapes 310, 320, 330, and 340 may provide one waterproof member forming a closed curve by assembly of the rear cover 102 and the frame 140. The waterproof member forming the closed curve may reduce moisture or foreign substances entering an inside of the electronic device 100 from the outside.

Some waterproof tapes 310 and 340 among the waterproof tapes 310, 320, 330, and 340 may be attached to the rear cover 102, and other waterproof tapes 320 and 330 among the waterproof tapes 310, 320, 330, and 340 may be attached to the sidewall 141 of the frame 140. The waterproof tapes 310 and 340 attached to the rear cover 102 may be integrally coupled with the waterproof tapes 320 and 330 attached to the frame 140 through assembly of the frame 140 and the rear cover 102.

Each of the waterproof tapes 310, 320, 330, and 340 may include adhesives spaced apart from each other, and substrates embedded in the respective adhesives and spaced apart from each other. A spaced-apart space between the substrates may be filled with the adhesives by pressure between the cover 102 and the frame 140 when the housing 110 is assembled. The adhesives may be formed from a material capable of flowing under pressure. The waterproof tapes 310, 320, 330, and 340 may form one waterproof member including a closed loop by connecting the substrates by the adhesives flowing into each other.

A boundary of the waterproof tapes 310, 320, 330, and 340 may be positioned on a plane of a surface of the frame 140 without any step difference. For example, the boundary of the waterproof tapes 310, 320, 330, and 340 may be disposed on the sidewall 141 of the frame 140 positioned alongside an opening 390 in which a battery 250 is disposed, instead of on the support portion 143 including a step or groove. The boundary of the waterproof tapes 310, 320, 330, and 340 may be disposed on an edge portion of the rear cover 102 positioned alongside the battery 250. A portion of the sidewall 141 extending along the opening 390 for the battery 250 may have a width and include a flat surface. For example, a surface of the portion of the sidewall 141 extending along the opening 390 for the battery 250, facing the rear cover 102, may be planar. As the boundary of the waterproof tapes 310, 320, 330, and 340 is disposed on a plane, during assembly of the housing 110 (or during assembly of the rear cover 102 and the frame 140), separation of a connection portion of the waterproof tapes 310, 320, 330, and 340, which is formed by the adhesives of the waterproof tapes 310, 320, 330, and 340, from the frame 140 or the rear cover 102 may be reduced.

The waterproof tapes 310, 320, 330, and 340 may be separated from each other and disposed on the rear cover 102 of the housing 110 or the sidewall 141 of the frame 140. For example, the first waterproof tape 310 may extend along a first corner, which is one of corners of the rear cover 102, a portion of a second corner and a portion of a third corner, both connected to the first corner. The second waterproof tape 320 may extend from an end of the first waterproof tape 310 along another portion of the second corner, and the third waterproof tape 330 may extend from another end of the first waterproof tape 310 along another portion of the third corner. The fourth waterproof tape 340 may extend along a fourth corner, a remaining portion of the second corner, and a remaining portion of the third corner, both connected to the fourth corner. The waterproof tapes 310, 320, 330, and 340 separated from each other may function as a waterproof member having a closed curve after assembly.

The waterproof tapes 310, 320, 330, and 340 may be formed of a plurality of waterproof members. For example, the first waterproof tape 310 and the second waterproof tape 320 may include a plurality of waterproof members to be integrally connected at a boundary portion. The first waterproof tape 310 may include a first waterproof member 311 attached along a portion of an edge of the rear cover 102, and the second waterproof tape 320 may include a second waterproof member 321 disposed along a portion of the sidewall 141 of the frame 140. The first waterproof tape 310 may further include a third waterproof member 312 spaced apart from an end of the first waterproof member 311, and the second waterproof tape 320 may further include a fourth waterproof member 322 spaced apart from an end of the second waterproof member 321. The third waterproof member 312 and the fourth waterproof member 322 may be disposed to overlay each other during assembly.

Although the waterproof tapes or the waterproof members according to the above-described embodiment have been described as being disposed on the edge of the rear cover 102 and the sidewall 141 of the frame 140, it is not limited thereto. For example, a portion of the waterproof tapes or the waterproof members may be disposed along an edge of a front cover (e.g., the front cover 101 of FIG. 2), and a remaining portion of the waterproof tapes or the waterproof members may be disposed along a sidewall or an edge of a bracket (e.g., the bracket 210 of FIG. 2). As a non-limiting example, when only the support portion 143 of the frame 140 is present and the sidewall 141 is integrally formed with the bracket 210, the sidewall of the bracket 210 and the rear cover 102 may be attached by the waterproof members or the waterproof tapes, and an internal space of the housing 110 may be isolated from the outside by the waterproof members between the bracket 210 and the rear cover 102.

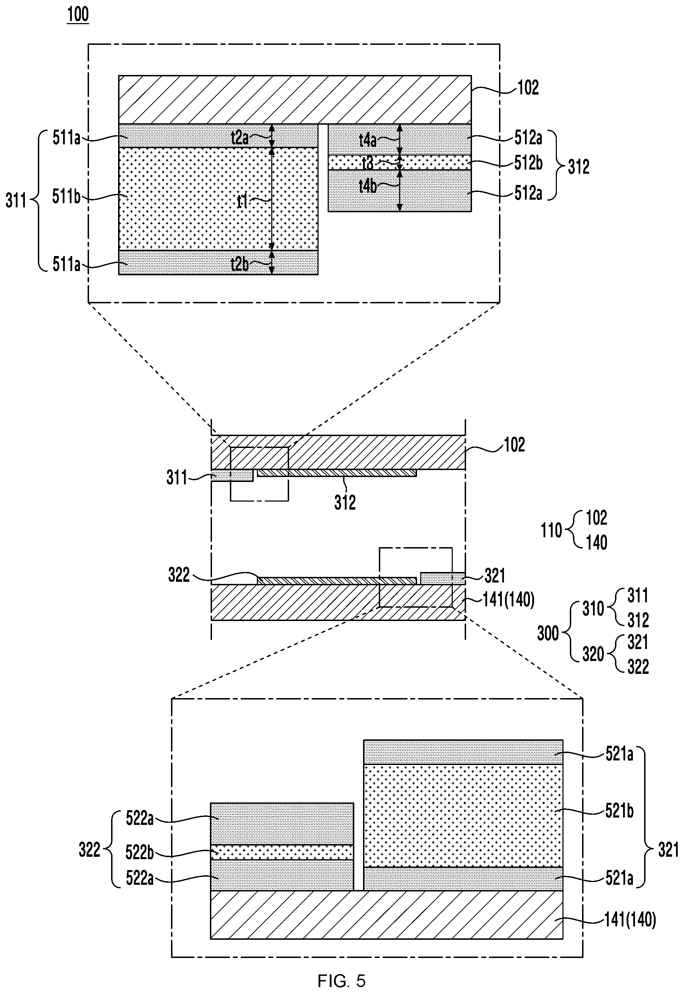

An arrangement of an adhesive and a substrate disposed at a boundary portion between the first waterproof member 311 and the second waterproof member 321 will be described with reference to FIG. 5, FIG. 6, and FIG. 7.

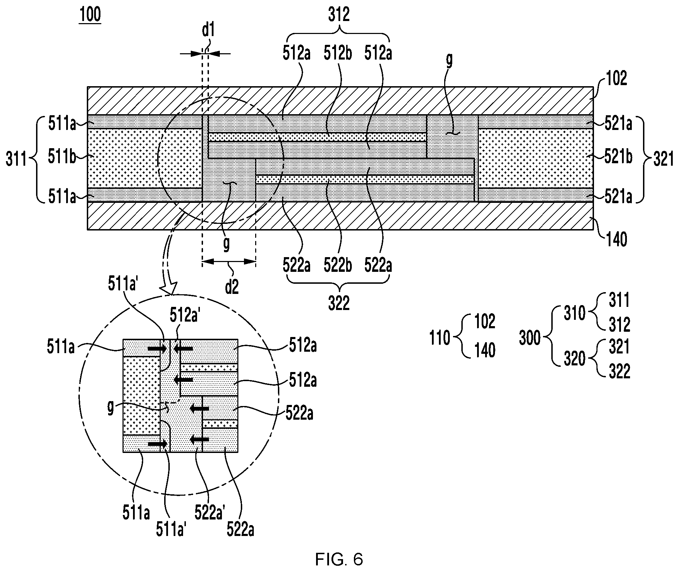

FIG. 5 illustrates an assembly operation of a cover to which adhesive members are attached and a frame to which adhesive members are attached. FIG. 6 illustrates an arrangement of adhesive members between a cover and a frame in a state in which a housing is assembled.

Referring to FIG. 5, each of waterproof tapes 310 and 320 before assembly of the housing may include a plurality of waterproof members 311, 312, 321, and 322.

As a non-limiting embodiment, a portion of the first waterproof tape 310 and a portion of the second waterproof tape 320 may be disposed to overlay with each other. For example, when a rear cover 102 is viewed from above, the first waterproof member 311 may be disposed to be spaced apart from the second waterproof member 321. When the rear cover 102 is viewed from above, the third waterproof member 312 and the fourth waterproof member 322 may be disposed between the first waterproof member 311 and the second waterproof member 321, and when the rear cover 102 is viewed from above, the third waterproof member 312 and the fourth waterproof member 322 may be disposed to overlay with each other during assembly.

The first waterproof member 311 may be disposed on a portion of an edge of a surface of the rear cover 102 of a housing 110, the surface facing an internal space of the housing 110. The edge of the surface of the rear cover 102 may face a frame 140. The second waterproof member 321 may be disposed on a surface of the frame 140 (or a sidewall 141) of the housing 110. The surface of the frame 140 (or the sidewall 141) may face the rear cover 102. The second waterproof member 321 may be disposed on a portion of an edge (or the sidewall 141) of the frame 140 corresponding to the edge of the rear cover 102. The third waterproof member 312 may be spaced apart from the first waterproof member 311 and may be disposed on another portion of the edge of the rear cover 102 of the housing 110. The fourth waterproof member 322 may be spaced apart from the second waterproof member 321 and may be disposed on another portion of the edge of the frame 140 (or another portion of the sidewall 141).

The first waterproof member 311 may include a first adhesive 511a and a first substrate 511b. The first adhesive 511a may be formed of a material having adhesiveness. The first adhesive 511a may have viscosity. The first substrate 511b may include a layer formed of a polymer or a film formed of a polymer. For example, the first substrate 511b may be formed from polyethylene terephthalate (PET), which is a polymer. The first substrate 511b may be embedded in the first adhesive 511a. For example, the first adhesive 511a may be applied on both surfaces of the first substrate 511b. The first substrate 511b may be interposed between the first adhesive 511a. The first waterproof member 311 including the first adhesive 511a applied on both surfaces of the first substrate 511b may function as a double-sided tape. The first waterproof member 311 may have a surface attached to the rear cover 102 of the housing 110, and during assembly of the housing 110, another surface may be attached to the sidewall 141 of the frame 140 of the housing 110.

The second waterproof member 321 may include a second adhesive 521a and a second substrate 521b. The second adhesive 521a may be formed of a material having adhesiveness. The second adhesive 521a may have viscosity. The second substrate 521b may include a layer formed of a polymer or a film formed of a polymer. For example, the second substrate 521b may be formed from PET, which is a polymer. The second substrate 521b may be embedded in the second adhesive 521a. For example, the second adhesive 521a may be applied on both surfaces of the second substrate 521b. The second substrate 521b may be interposed between the second adhesive 521a. The second waterproof member 321 including the second adhesive 521a applied on both surfaces of the second substrate 521b may function as a double-sided tape. The second waterproof member 321 may have a surface attached to the sidewall 141 of the frame 140 of the housing 110 and, during assembly of the housing 110, another surface may be attached to the edge of the rear cover 102 of the housing 110. A configuration of the first waterproof member 311 and the second waterproof member 321 may be substantially the same. For example, a ratio and a composition ratio of the first adhesive 511a and the second adhesive 521a may be substantially the same, and a thickness of the first substrate 511b and a thickness of the second substrate 521b may be substantially the same.

The third waterproof member 312 may include a third adhesive 512a and a third substrate 512b. The third adhesive 512a may be formed of a material having adhesiveness. The third adhesive 512a may have viscosity. The third substrate 512b may include a layer formed of a polymer or a film formed of a polymer. The third substrate 512b may be formed from the same material (e.g., PET) as the first substrate 511b and the second substrate 521b. The third substrate 512b may be embedded in the third adhesive 512a. For example, the third substrate 512b may be interposed between the third adhesive 512a. The third waterproof member 312 including the third adhesive 512a applied on both surfaces of the third substrate 512b may function as a double-sided tape similarly to the first waterproof member 311. The third waterproof member 312 may have a surface attached to the rear cover 102 of the housing 110 similarly to the first waterproof member 311, and during assembly of the housing 110, another surface may be attached to the frame 140 of the housing 110. The third waterproof member 312 may be spaced apart from the first waterproof member 311 and attached to the rear cover 102. For example, the first waterproof member 311 may be attached to a portion of the edge of the rear cover 102, and the third waterproof member 312 may be attached to another portion of the edge of the rear cover 102 (a waterproof member disposed on another portion of the edge of the rear cover 102). The portion of the edge of the rear cover 102 may be spaced apart from another portion of the edge of the rear cover 102.

The fourth waterproof member 322 may include a fourth adhesive 522a and a fourth substrate 522b. The fourth adhesive 522a may be formed of a material having adhesiveness. The fourth adhesive 522a may have viscosity. The fourth substrate 522b may include a layer formed of a polymer or a film formed of a polymer. The fourth substrate 522b may be formed from the same material (e.g., PET) as the first substrate 511b and the second substrate 521b. The fourth substrate 522b may be embedded in the fourth adhesive 522a. The fourth substrate 522b may be interposed between the fourth adhesive 522a. The fourth waterproof member 322 including the fourth adhesive 522a applied on both surfaces of the fourth substrate 522b may function as a double-sided tape similarly to the second waterproof member 321. The fourth waterproof member 322 may have a surface attached to the frame 140 of the housing 110 similarly to the second waterproof member 321, and during assembly of the housing 110, another surface may be attached to the rear cover 102 of the housing 110. The fourth waterproof member 322 may be spaced apart from the second waterproof member 321 and attached to the frame 140. For example, the second waterproof member 321 may be attached to a portion of the sidewall 141 of the frame 140, and the fourth waterproof member 322 may be attached to another portion of the sidewall 141 of the frame 140 (or a waterproof member disposed on another portion of the sidewall 141 of the frame 140). The portion of the sidewall 141 of the frame 140 may be spaced apart from another portion of the sidewall 141 of the frame 140.

A configuration of the third waterproof member 312 and the fourth waterproof member 322 may be substantially the same. For example, a ratio and a composition ratio of the third adhesive 512a and the fourth adhesive 521a may be substantially the same, and a thickness of the third substrate 512b and a thickness of the fourth substrate 322b may be substantially the same. A configuration of an adhesive 312a or 322a of the third waterproof member 312 and the fourth waterproof member 322 may be substantially the same, and may function as one adhesive when the housing 110 is assembled. For example, in a state in which the housing 110 is assembled, the third substrate 512b and the fourth substrate 322b may appear to be embedded in one adhesive.

An area in which the first waterproof member 311 and the second waterproof member 321 are adhered between the rear cover 102 of the housing 110 and the frame 140 of the housing 110 may be wider than an area in which the third waterproof member 312 and the fourth waterproof member 322 are adhered between the rear cover 102 of the housing 110 and the frame 140 of the housing 110. In order to reduce flow of an adhesive into an inside of an electronic device 100, a ratio of the adhesive of the first waterproof member 311 or the second waterproof member 321 may be relatively smaller than a ratio of the adhesive of the third waterproof member 312 or the fourth waterproof member 322. To fill a gap spaced apart from the first waterproof member 311 or the second waterproof member 321 in a state in which the housing 110 is assembled (or a state in which the rear cover 102 or the frame 140 is coupled), the ratio of the adhesive of the third waterproof member 312 or the fourth waterproof member 322 may be relatively larger than the ratio of the adhesive of the first waterproof member 311 or the second waterproof member 321.

A thickness t1 of the first substrate 511b of the first waterproof member 311 or the second substrate 521b of the second waterproof member 321 may be thicker than a thickness t2 of the third substrate 512b of the third waterproof member 312 or the fourth substrate 522b of the fourth waterproof member 322. A ratio of the third adhesive 512a in the third waterproof member 312 or a ratio of the fourth adhesive 522a in the fourth waterproof member 322 may be larger than a ratio of the first adhesive 511a in the first waterproof member 311 or a ratio of the third adhesive 512a in the second waterproof member 321. For example, (t2a+t2b)/t1, which is a ratio of a sum of thicknesses t2a and t2b of the first adhesive 511a disposed on both surfaces of the first substrate 511b of the first waterproof member 311 relative to the thickness t1 of the first substrate 511b of the first waterproof member 311, may be smaller than (t4a+t4b)/t3, which is a ratio of a sum of thicknesses t4a and t4b of the third adhesive 512a disposed on both surfaces of the third substrate 512b of the third waterproof member 312 relative to the thickness t3 of the third substrate 512b of the third waterproof member 312.

As a non-limiting example, the thickness t1 of the first substrate 511b of the first waterproof member 311 may be thicker than an applied thickness t2a or t2b of the first adhesive 511a disposed on each surface of the first substrate 511b. For example, the thickness t1 of the first substrate 511b of the first waterproof member 311 may be approximately 35% to 40% of a total thickness of the first waterproof member 311, and each thickness t2a and t2b of the first adhesive 511a of the first waterproof member 311 applied on each surface of the first substrate 511b may be approximately 30% to 32.5%.

As a non-limiting example, the thickness t3 of the third substrate 512b of the third waterproof member 312 may be smaller than a sum of thicknesses of the third adhesive 512a applied on both surfaces of the third substrate 512b. For example, the thickness t3 of the third substrate 512b of the third waterproof member 312 may be approximately 20% to 40% of a total thickness of the third waterproof member 312, and each thickness t4a and t4b of the third adhesive 512a of the third waterproof member 312 applied on each surface of the third substrate 512b may be approximately 30% to 40%.

According to an embodiment, the third adhesive 512a of the third waterproof member 312 and the fourth adhesive 522a of the fourth waterproof member 322 may include an adhesive material having higher fluidity than the first adhesive 511a and the second adhesive 521a.

Referring to FIG. 6, in a state in which a housing 110 of an electronic device 100 is assembled, a deformed state of waterproof tapes 310 and 320 including waterproof members 311, 312, 321, and 322 is illustrated.

The first waterproof tape 310 may include the first waterproof member 311 and the third waterproof member 312. The first waterproof member 311 and the third waterproof member 312 may be attached to a base material of the first waterproof tape 310 before being attached to the housing 110. The third waterproof member 312 may be disposed alongside the first waterproof member 311. The third waterproof member 312 may be spaced apart from the first waterproof member 311. While different waterproof members are disposed on one waterproof tape, a separation distance d1 corresponding to an attachment tolerance may be provided to prevent overlapping between the waterproof members. The first waterproof tape 310 formed from the first waterproof member 311 and the third waterproof member 312 may be attached to a rear cover 102 of the housing 110.

The second waterproof tape 320 may include the second waterproof member 321 and the fourth waterproof member 322. The second waterproof member 321 and the fourth waterproof member 322 may be attached to a base material of the second waterproof tape 320 before being attached to the housing 110. The fourth waterproof member 322 may be disposed alongside the second waterproof member 321. The fourth waterproof member 322 may be spaced apart from the second waterproof member 321. While different waterproof members are disposed on one waterproof tape, the separation distance d1 corresponding to the attachment tolerance may be provided to prevent overlapping between the waterproof members. The second waterproof tape 320 formed from the second waterproof member 321 and the fourth waterproof member 322 may be attached to a sidewall 141 of a frame 140 of the housing 110.

The rear cover 102 of the housing 110 may be attached to the frame 140 of the housing 110 through the first waterproof tape 310 and the second waterproof tape 320. The first waterproof tape 310 may partially overlap the second waterproof tape 320. For example, the third waterproof member 312 of the first waterproof tape 310 may at least partially overlap the fourth waterproof member 322 of the second waterproof tape 320. In a state in which the cover 102 of the housing 110 and the frame 140 of the housing 110 are attached to each other, a distance d1 between a third substrate 512b of the third waterproof member 312 and a first substrate 511b of the first waterproof member 311 positioned alongside the third waterproof member 312 may be different from a distance d2 between a fourth substrate 522b of the fourth waterproof member 322 and the first substrate 511b of the first waterproof member 311 positioned alongside the fourth waterproof member 322. The distance d1 between the third substrate 512b of the third waterproof member 312 and the first substrate 511b of the first waterproof member 311 positioned alongside the third waterproof member 312 may be different from a distance d2 between the third substrate 512b of the third waterproof member 312 and a second substrate 521b of the second waterproof member 321 positioned alongside the third waterproof member 312. The distance d1 corresponding to the attachment tolerance within an assembly process of the first waterproof tape 310 may be closer than the distance d2 between the first waterproof tape 310 and the second waterproof tape 320, which corresponds to an assembly tolerance for assembly of the housing 110.

A gap g between the first waterproof tape 310 and the second waterproof tape 320 may be formed by the distance d1 between the first substrate 511b of the first waterproof member 311 and the third substrate 512b of the third waterproof member 312 due to the attachment tolerance and the distance d2 between the first substrate 511b of the first waterproof member 311 and the fourth substrate 522b of the fourth waterproof member 322 due to the assembly tolerance. Due to the gap g, the first substrate 511b of the first waterproof member 311 may be spaced apart from the third substrate 512b of the third waterproof member 312, and the first substrate 511b of the first waterproof member 311 may be spaced apart from the fourth substrate 522b of the fourth waterproof member 322. Due to an attachment tolerance by attachment of the waterproof tapes 310 and 320 separated from each other, the gap g may be formed between the waterproof tapes 310 and 320. When the gap g is maintained, foreign substances may enter an inside of the electronic device 100, and thus the waterproof tapes 310 and 320 may be deformed to fill the gap g.

In order for adhesives 511a, 512a, 521a, and 522a of the waterproof tapes 310 and 320 to move toward the gap g to fill the gap g, the rear cover 102 of the housing 110 and the frame 140 of the housing 110 may be pressed during an assembly process of the housing 110. By pressing the rear cover 102 of the housing 110 and the frame 140 of the housing 110, the adhesives 511a, 512a, 521a, and 522a may move into the gap between the waterproof tapes 310 and 320, and the gap g may be filled with the adhesives 511a, 512a, 521a, and 522a. For example, the third waterproof member 312 and/or the fourth waterproof member 322 may connect the first waterproof member 311 and the second waterproof member 321 such that the waterproof members or the waterproof tapes including the waterproof members form a closed curve. The third adhesive 512a and the fourth adhesive 522a having high fluidity may fill most of the gap g. For example, since an occupancy ratio of the adhesive in the first waterproof member 311 and the second waterproof member 321 is low, an amount of the first adhesive 511a and the second adhesive 521a that moves into the gap g may be smaller than an amount of the third adhesive 512a and the fourth adhesive 522a that moves into the gap g. Since an occupancy ratio of the adhesive in the third waterproof member 312 and the fourth waterproof member 322 is high, an amount of the third adhesive 512a and the fourth adhesive 522a that moves into the gap g may be greater than an amount of the first adhesive 511a and the second adhesive 521a that moves into the gap g.

For example, due to pressure between the rear cover 102 of the housing 110 and the frame 140 of the housing 110, a portion 511a' of the first adhesive 511a of the first waterproof member 311 may move into the gap g and occupy a portion of the gap g adjacent to the first adhesive 511a and the first substrate 511b. Due to pressure between the rear cover 102 of the housing 110 and the frame 140 of the housing 110, a portion 512a' of the third adhesive 512a of the third waterproof member 312 may move into the gap g and occupy another portion of the gap g adjacent to the third adhesive 512a and the third substrate 512b. Due to pressure between the rear cover 102 of the housing 110 and the frame 140 of the housing 110, a portion 522a' of the fourth adhesive 522a of the fourth waterproof member 322 may move into the gap g and occupy another portion of the gap g adjacent to the fourth adhesive 522a and the fourth substrate 522b.

By the flow of the first adhesive 511a, the third adhesive 512a, and the fourth adhesive 522a, the gap g may be filled. The second adhesive 521a, the third adhesive 512a, and the fourth adhesive 522a may fill a gap between the second substrate 521b and the third substrate 512b and a gap between the second substrate 521b and the fourth substrate 522b in the same manner as the above-described process.

As the gap g is filled with the adhesives 511a, 512a, 521a, and 522a, foreign substances entering the inside of the electronic device 100 from the outside of the electronic device 100 may be reduced.

As the adhesives 511a, 512a, 521a, and 522a directly fill the gap g, a boundary of the waterproof tapes 310 and 320 may not include a structure for increasing resistance to moisture migration. For example, end portions of the waterproof tapes 310 and 320 may be formed in a straight line rather than in a pattern or a zigzag shape (or an uneven shape). End portions of the substrates 511b, 512b, 521b, and 522b in the waterproof tapes 310 and 320 may be disposed parallel to end portions of facing substrates.

The waterproof tapes 310 and 320 having end portions disposed parallel to each other in a straight line shape may reduce an assembly tolerance. As the assembly tolerance is reduced, the distance d2 may be reduced. The distance d1 corresponding to the attachment tolerance may be approximately 0.001 mm to 0.05 mm, and the distance d2 corresponding to the assembly tolerance may be approximately 0.15 mm to 0.25 mm.

As the distance d2 between tapes having end portions disposed parallel to each other in a straight line shape is reduced, the gap g may be filled with the adhesives 512a and 522a of the third waterproof member 312 and the fourth waterproof member 322.

According to the above-described embodiment, the electronic device 100 may divide the waterproof tapes 310 and 320, thereby improving convenience of assembly while improving waterproof performance by filling a gap between the waterproof tapes 310 and 320. Even while attaching different waterproof tapes 310 and 320, a process of filling the gap using a separate material for waterproofing may be eliminated, thereby reducing manufacturing time and lowering cost.

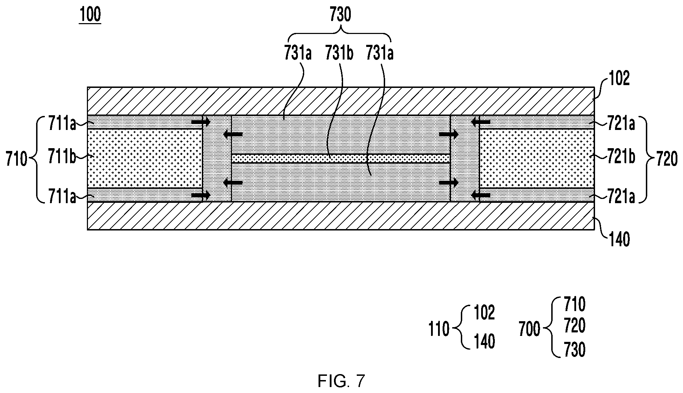

FIG. 7 illustrates an example of adhesive members disposed between a cover and a frame in a state in which a housing is assembled.

Referring to FIG. 7, an electronic device 100 may include a first waterproof member 710, a second waterproof member 720, and a third waterproof member 730.

As a non-limiting embodiment, the first waterproof member 710 and the third waterproof member 730 may be formed as one tape, or the second waterproof member 720 and the third waterproof member 730 may be formed as one tape. A waterproof tape configured with the first waterproof member 710 and the third waterproof member 730 (or a waterproof tape configured with the first waterproof member 710) may be attached to a rear cover 102 (or a frame 140) of a housing 110, and a waterproof tape configured with the second waterproof member 720 (or a waterproof tape configured with the second waterproof member 720 and the third waterproof member 730) may be attached to the frame 140 (or the rear cover 102) of the housing 110.

The first waterproof member 710 may include a first adhesive 711a and a first substrate 711b. The first adhesive 711a may be formed of a material having adhesiveness. The first adhesive 711a may have viscosity. The first substrate 711b may include a layer formed of a polymer or a film formed of a polymer. The first substrate 711b may be embedded in the first adhesive 711a. The first substrate 711b may be interposed between the first adhesive 711a. For example, the first adhesive 711a may be applied on both surfaces of the first substrate 711b. The first waterproof member 710 including the first adhesive 711a applied on both surfaces of the first substrate 711b may function as a double-sided tape. The first waterproof member 710 may have a surface attached to the rear cover 102 of the housing 110, and during assembly of the housing 110, another surface may be attached to the frame 140 of the housing 110.

The second waterproof member 720 may include a second adhesive 721a and a second substrate 721b. The second adhesive 721a may be formed of a material having adhesiveness. The second adhesive 721a may have viscosity. The second substrate 721b may include a layer formed of a polymer or a film formed of a polymer. The second substrate 721b may be embedded in the second adhesive 721a. The second substrate 721b may be interposed between the second adhesive 721a. For example, the second adhesive 721a may be applied on both surfaces of the second substrate 721b. The second waterproof member 720 including the second adhesive 721a applied on both surfaces of the second substrate 721b may function as a double-sided tape. The second waterproof member 720 may have a surface attached to the frame 140 of the housing 110, and during assembly of the housing 110, another surface may be attached to the rear cover 102 of the housing 110. A configuration of the first waterproof member 710 and the second waterproof member 720 may be substantially the same. For example, a ratio and a composition ratio of the first adhesive 711a and the second adhesive 721a may be substantially the same, and a thickness of the first substrate 711b and a thickness of the second substrate 721b may be substantially the same.

The third waterproof member 730 may include a third adhesive 731a and a third substrate 731b. The third adhesive 731a may be formed of a material having adhesiveness. The third adhesive 731a may have viscosity. The third substrate 731b may include a layer formed of a polymer or a film formed of a polymer. The third substrate 731b may be embedded in the third adhesive 731a. The third substrate 731b may be interposed between the third adhesive 731a. For example, the third adhesive 731a may be applied on both surfaces of the third substrate 731b. The third waterproof member 730 including the third adhesive 731a applied on both surfaces of the third substrate 731b may function as a double-sided tape. The third waterproof member 730 may have a surface attached to the frame 140 (or the rear cover 102) of the housing 110, and during assembly of the housing 110, another surface may be attached to the rear cover 102 (or the frame 140) of the housing 110.

A ratio of the third adhesive 731a of the third waterproof member 730 relative to the entire third waterproof member 730 may be larger than a ratio of the first adhesive 711a of the first waterproof member 710 relative to the entire first waterproof member 710 or a ratio of the second adhesive 721a of the second waterproof member 720 relative to the entire second waterproof member 720. The third adhesive 731a of the third waterproof member 730 may, during assembly of the housing 110, fill a gap between the first substrate 711b and the third substrate 731b and a gap between the second substrate 721b and the third substrate 731b by pressing the rear cover 102 and the frame 140. The third adhesive 731a may connect the first waterproof member 710 and the third waterproof member 730 to each other.

According to the above-described embodiment, the electronic device 100 may divide the waterproof tapes, thereby improving convenience of assembly while improving waterproof performance by filling a gap between the waterproof tapes. Even while attaching different waterproof tapes, a process of filling the gap using a separate material for waterproofing may be eliminated, thereby reducing manufacturing time and lowering cost.

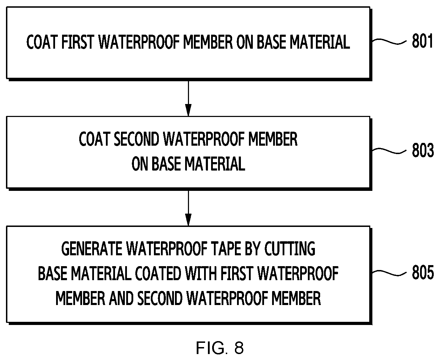

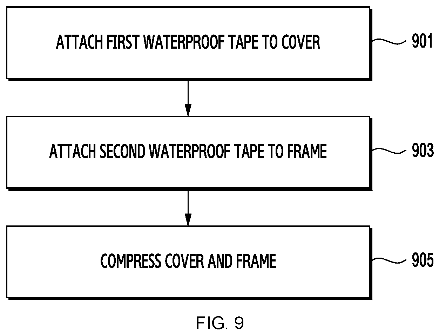

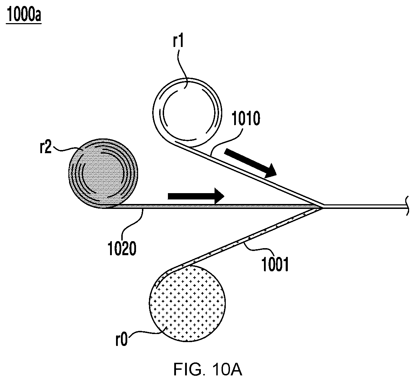

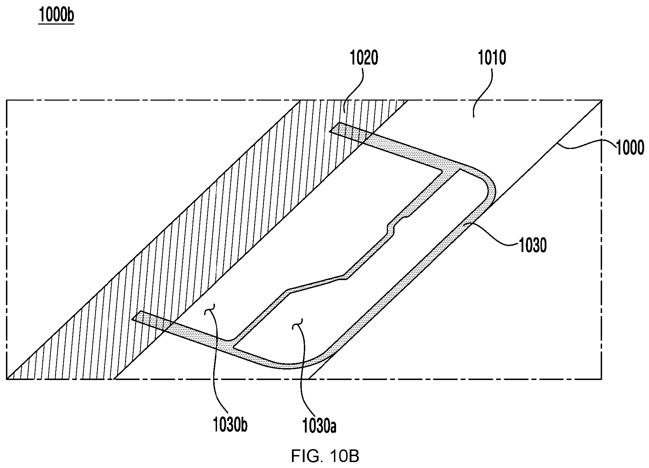

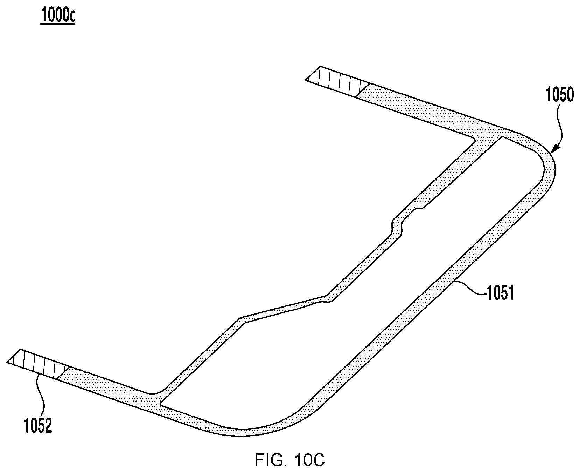

FIG. 8 is a flowchart illustrating a manufacturing process of a waterproof tape used for assembly of a housing. FIG. 9 is a flowchart illustrating a manufacturing process of a housing. FIG. 10A, FIG. 10B, and FIG. 10C are conceptual diagrams illustrating a manufacturing process of a waterproof tape.

Referring to FIG. 8 and FIG. 10A, in process 801, a first waterproof member 1010 (e.g., the first waterproof member 311 of FIG. 4) may be coated on a base material. For example, the first waterproof member 1010 in a first state 1000a of FIG. 10A may be coated on a layer 1001 of a first waterproof tape (e.g., the first waterproof tape 310 of FIG. 4).

As a non-limiting embodiment, the first waterproof member 1010 may be wound around a first roller r1, and the layer 1001 may be wound around a base material roller r0. The base material may be supplied through rotation of the base material roller r0, and the first roller r1 may be rotated together with the base material roller r0 to coat the first waterproof member 1010 on the layer 1001.

The layer 1001 may indicate a base material of a tape or a release liner. The first waterproof member 1010 may include a first adhesive (e.g., the first adhesive 511a of FIG. 5) and a first substrate (e.g., the first substrate 511b of FIG. 5) embedded in (or interposed between) the first adhesive. A structure of the first waterproof member 1010 may be identical or similar to the configuration of the first waterproof member 311 of FIG. 5.

In process 803, a second waterproof member 1020 (e.g., the third waterproof member 312 of FIG. 4) may be coated on the base material. For example, the second waterproof member 1020 may be coated on the layer 1001 of the first waterproof tape 310 such that the second waterproof member 1020 is positioned close to the first waterproof member 1010.

As a non-limiting embodiment, the second waterproof member 1020 may be wound around a second roller r2. After the first waterproof member 1010 is coated on the layer 1001, rotation of the first roller r1 may stop, and the base material may be supplied through rotation of the base material roller r0. The second roller r2 may be rotated together with the base material roller r0 to coat the second waterproof member 1020 on the layer 1001. As rotation of the first roller r1 stops and the second roller r2 rotates, the first waterproof member 1010 and the second waterproof member 1020 may be disposed so as not to overlap each other.

The second waterproof member 1020 may include a second adhesive (e.g., the third adhesive 512a of FIG. 5) and a second substrate (e.g., the third substrate 512b of FIG. 5) embedded in (or interposed between) the second adhesive.

As the first waterproof member 1010 and the second waterproof member 1020 are coated on the waterproof tape, a waterproof tape 1000 in a second state 1000b before being cut may be obtained.

In process 805, a waterproof tape may be generated by cutting the base material 1001 coated with the first waterproof member 1010 and the second waterproof member 1020.

The base material of the first waterproof tape 1001 coated with the first waterproof member 1010 and the second waterproof member 1020 may be cut to form a first waterproof tape (e.g., a waterproof tape 1050 of FIG. 10C).

Referring to FIG. 10B and FIG. 10C, the waterproof tape 1000 before being cut may be coated on the layer 1001 and may include the first waterproof member 1010 and the second waterproof member 1020 spaced apart from each other. Through a punching process, the waterproof tape 1000 before being cut may obtain the waterproof tape 1050. Through the punching process, unnecessary portions 1030a and 1030b of the waterproof tape may be removed from the waterproof tape 1000 before being cut.

The waterproof tape 1050 in a third state 1000c may be obtained through the punching process. The waterproof tape 1050 may include a cut first waterproof member 1051 and cut second waterproof members 1052 positioned at both ends of the cut first waterproof member 1051.

Through the process 801, process 803, and process 805, the first waterproof tape 310, the second waterproof tape 320, the third waterproof tape 330, and the fourth waterproof tape 340 of FIG. 3 may be obtained.

In a case of forming an integrated waterproof tape at once, an amount of a punched base material and a punched waterproof member may increase. In a case of forming a plurality of waterproof tapes 310, 320, 330, and 340, a base material and a waterproof member disposed inside the first waterproof tape 310 and the fourth waterproof tape 340 are removed, but the second waterproof tape 320 and the third waterproof tape 330 may be formed by cutting one tape coated with waterproof members at regular intervals, thereby reducing an amount of wasted base material.

The waterproof tapes obtained through the process 801, process 803, and process 805 may be disposed in the housing through the process of FIG. 9, thereby connecting the cover and the frame and isolating an internal space of the electronic device from the outside for waterproofing.

Referring to FIG. 9, in process 901, a first waterproof tape (e.g., the first waterproof tape 310 of FIG. 5) may be attached to a cover (e.g., the rear cover 102 of FIG. 5). The first waterproof tape including a first waterproof member (e.g., the first waterproof member 311 of FIG. 5) and a third waterproof member (e.g., the third waterproof member 312 of FIG. 5) may be attached to the cover. For example, by attaching the first waterproof tape to the cover, the first waterproof member may be attached to a first portion of an edge of the cover, and the third waterproof member may be attached to a second portion of the edge of the cover. Since the first waterproof member and the third waterproof member are spaced apart from each other, the second portion of the cover to which the third waterproof member is attached may be spaced apart from the first portion of the cover to which the first waterproof member is attached.

Through process 901, a fourth waterproof tape (e.g., the fourth waterproof tape 340 of FIG. 4) may also be attached to the rear cover in the same manner.

In process 903, a second waterproof tape (e.g., the second waterproof tape 320 of FIG. 5) may be attached to a frame (e.g., the frame 140 of FIG. 5). The second waterproof tape including a fourth waterproof member (e.g., the fourth waterproof member 322 of FIG. 5) and a second waterproof member (e.g., the second waterproof member 321 of FIG. 5) may be attached to the frame. For example, by attaching the second waterproof tape to the frame, the second waterproof member may be attached to a first portion of a sidewall of the frame, and the fourth waterproof member may be attached to a second portion of the sidewall of the frame. Since the second waterproof member and the fourth waterproof member are spaced apart from each other, the second portion of the frame to which the fourth waterproof member is attached may be spaced apart from the first portion of the frame to which the second waterproof member is attached.

Through process 903, a third waterproof tape (e.g., the third waterproof tape 330 of FIG. 4) may also be attached to the frame in the same manner.

In process 905, the cover and the frame may be compressed against each other. The rear cover and the frame to which the waterproof tapes are attached as shown in FIG. 4 may be disposed as shown in FIG. 5.

In process 905, for compressing between the cover and the frame, the frame may be disposed over the cover. The cover and the frame may be arranged such that the third waterproof member (e.g., the third waterproof member 312 of FIG. 5) attached to the second portion of the edge of the cover 102 at least partially overlays the fourth waterproof member (e.g., the fourth waterproof member 322 of FIG. 5) attached to the first portion of the sidewall 141 of the frame 140.

Based on depressing the frame disposed over the cover relative to the cover such that the third waterproof member overlays the fourth waterproof member (or based on depressing the arranged frame relative to the arranged cover), the third waterproof member and the fourth waterproof member may connect the first waterproof member and the second waterproof member by filling a gap formed between the first portion of the edge of the cover and the second portion of the edge of the cover and filling a gap formed between the first portion of the sidewall of the frame and the second portion of the sidewall of the frame with an adhesive in the third waterproof member and an adhesive in the fourth waterproof member.

The above-described process 901, process 903, and process 905 may be equally applied between a boundary between the first waterproof tape 310 and the third waterproof tape 330, a boundary between the fourth waterproof tape 340 and the second waterproof tape 320, and a boundary between the fourth waterproof tape 340 and the third waterproof tape 330, all shown in FIG. 4.

For example, in process 905, the rear cover to which the first waterproof tape and the fourth waterproof tape are applied may be disposed over the frame to which the second waterproof tape and the third waterproof tape are applied.

A waterproof member disposed at an end portion of the first waterproof tape may at least partially overlay a waterproof member disposed at an end portion of the third waterproof tape. The waterproof member disposed at the end portion of the first waterproof tape may be spaced apart from a waterproof member forming most of the first waterproof tape (e.g., the first waterproof member 311 of FIG. 4), and the waterproof member disposed at the end portion of the third waterproof tape may be spaced apart from a waterproof member forming most of the third waterproof tape.

A waterproof member disposed at an end portion of the second waterproof tape may at least partially overlay a waterproof member disposed at an end portion of the fourth waterproof tape. The waterproof member disposed at the end portion of the second waterproof tape may be spaced apart from a waterproof member forming most of the second waterproof tape (e.g., the second waterproof member 321 of FIG. 4), and the waterproof member disposed at the end portion of the fourth waterproof tape may be spaced apart from a waterproof member forming most of the fourth waterproof tape.

A waterproof member disposed at another end portion of the third waterproof tape may at least partially overlay a waterproof member disposed at another end portion of the fourth waterproof tape. The waterproof member disposed at the another end portion of the third waterproof tape may be spaced apart from the waterproof member forming most of the third waterproof tape, and the waterproof member disposed at the another end portion of the fourth waterproof tape may be spaced apart from the waterproof member forming most of the fourth waterproof tape.

Based on depressing the frame disposed over the cover relative to the cover such that the waterproof members disposed at both end portions overlay each other, an adhesive in the waterproof member disposed at both end portions of each waterproof tape may fill gaps between the waterproof members. As the adhesive of the waterproof members fills the gaps, the waterproof members may be connected to each other, and may function as a waterproof member forming one closed curve.

The electronic device and the housing manufacturing method according to the above-described embodiment may be applied not only to smartphones but also to electronic products requiring a waterproof function, such as a tablet, a laptop, or a watch.

According to an embodiment, the electronic device and the housing manufacturing method may isolate an internal space of the housing from the outside by physically filling an empty gap between waterproof tapes. As the internal space is isolated from the outside, an adhesive filling the gap between the waterproof tapes may reduce moisture entering an inside of the housing from the outside.

Compared to an integrated waterproof tape, waste of a base material may be reduced during a punching process.

Since a process of providing an additional waterproof member to fill a gap between segmented waterproof tapes may be omitted, work efficiency may be improved.

The technical problems to be achieved in the present disclosure are not limited to those described above, and other technical problems not mentioned herein will be clearly understood by those having ordinary skill in the art to which the present disclosure belongs.

According to the above-described embodiment, an electronic device (e.g., the electronic device 100 of FIG. 5) may comprise a cover (e.g., the rear cover 102 of FIG. 5) forming a rear side of the electronic device. The electronic device may further comprise a frame (e.g., the frame 140 of FIG. 5) disposed below the cover. The electronic device may further comprise waterproof members (e.g., the waterproof members 311, 312, 321, and 322 of FIG. 5) disposed along an edge portion of the cover and coupling the cover and the frame. The waterproof members may include a first waterproof member (e.g., the first waterproof member 311 of FIG. 5) including a first adhesive (e.g., the first adhesive 511a of FIG. 5) and a first substrate (e.g., the first substrate 511b of FIG. 5) interposed between the first adhesive. The waterproof members may further include a second waterproof member (e.g., the second waterproof member 321 of FIG. 5) spaced apart from the first waterproof member and including a second adhesive (e.g., the second adhesive 521a of FIG. 5) and a second substrate (e.g., the second substrate 521b of FIG. 5) interposed between the second adhesive. The waterproof members may further include a third waterproof member (e.g., the third waterproof member 312 or the fourth waterproof member 322 of FIG. 5) connecting the first waterproof member and the second waterproof member. The third waterproof member may further include a third adhesive (e.g., the third adhesive 512a or the fourth adhesive 522a of FIG. 5) coupled to the first adhesive and the second adhesive. The third waterproof member may further include a third substrate (e.g., the third substrate 512b or the fourth substrate 522b of FIG. 5) interposed between the third adhesive and spaced apart from the first substrate and the second substrate.

The electronic device according to the above-described embodiment may isolate an internal space of a housing from outside by physically filling an empty gap between waterproof tapes. As the internal space is isolated from the outside, an adhesive filling the gap between the waterproof tapes may reduce moisture entering an inside of the housing from the outside. Since a process of providing an additional waterproof member to fill the gap between the segmented waterproof tapes may be omitted, work efficiency may be improved.

A thickness of the first substrate or a thickness of the second substrate may be greater than a thickness of the third substrate.

A ratio of the first adhesive in the first waterproof member or a ratio of the second adhesive in the second waterproof member may be smaller than a ratio of the third adhesive in the third waterproof member.

According to the above-described embodiment, a relatively large amount of the third adhesive may be disposed in the third waterproof member, and thus the third adhesive may effectively fill a gap between the first waterproof member and the third waterproof member or a gap between the second waterproof member and the third waterproof member.

The third waterproof member may connect the first waterproof member and the second waterproof member such that the waterproof members form a closed curve. One waterproof member formed by connecting the first waterproof member, the second waterproof member, and the third waterproof member to each other may be formed as a closed curve. The one waterproof member formed by connecting the first waterproof member, the second waterproof member, and the third waterproof member to each other may isolate an inside of the electronic device from the outside of the electronic device.

According to the above-described embodiment, as the internal space of the electronic device is isolated from the outside, the adhesive filling the gap between the waterproof tapes may reduce moisture entering the inside of the housing from the outside.

The electronic device may further comprise a battery (e.g., the battery 250 of FIG. 2) disposed within an internal space defined by the cover and the frame. The third waterproof member may be disposed on a sidewall portion of the frame positioned alongside the battery.

According to the above-described embodiment, the sidewall portion of the frame may be formed as a flat surface, thereby improving adhesive force of a boundary portion on which the third waterproof member is disposed.

The third waterproof member may further include a fourth substrate interposed between the third adhesive. The fourth substrate may overlay with the third substrate and may be spaced apart from the first substrate and the second substrate.

A distance between the fourth substrate and the first substrate may be different from a distance between the third substrate and the second substrate. The distance between the fourth substrate and the first substrate may be different from a distance between the fourth substrate and the second substrate.

A ratio of the third substrate in the third waterproof member may be approximately 20% to 40%.

The waterproof members may reduce foreign substances entering from the outside of the electronic device through a space between the frame and the cover.

The third adhesive may flow from the third substrate toward the first substrate and the second substrate by compression between the cover and the frame.

A corner of the first substrate facing the third substrate may be parallel to a corner of the third substrate facing the first substrate.

A distance between the first substrate and the third substrate may be different from a distance between the second substrate and the third substrate.

The first waterproof member may extend along a first corner of the cover and a portion of a second corner of the cover, the second corner of the cover connected to the first corner of the cover. The second waterproof member may extend along another portion of the second corner, toward an end portion of the first waterproof member.

The electronic device may further comprise a fourth waterproof member spaced apart from another end portion of the first waterproof member. The first waterproof member may extend along a portion of a third corner of the cover, the third corner of the cover connected to the first corner of the cover.

The fourth waterproof member may extend along another portion of the third corner, toward another end portion of the first waterproof member, and may include a fourth adhesive and a fourth substrate embedded in the fourth adhesive.

The electronic device may further comprise a fifth waterproof member connecting the first waterproof member and the fourth waterproof member, and including a fifth adhesive contacting the first adhesive and the fourth adhesive in the fourth waterproof member, and a fifth substrate embedded in the fifth adhesive and spaced apart from the first substrate and the fourth substrate.

According to an embodiment, a housing manufacturing method may comprise attaching a first waterproof member 311, a second waterproof member 321, a third waterproof member 312, and a fourth waterproof member 322 of a first waterproof tape 310 and a second waterproof tape 320 to corresponding portions of a cover 102 and a frame 140, and the attaching of the waterproof members may include attaching the first waterproof member 311 of the first waterproof tape 310 to a first portion of an edge of the cover 102, attaching the third waterproof member 312 of the first waterproof tape 310 to a second portion of the edge of the cover 102 spaced apart from the first portion of the edge of the cover 102, attaching the second waterproof member 321 of the second waterproof tape 320 to a first portion of a sidewall of the frame 140, and attaching the fourth waterproof member 322 of the second waterproof tape 320 to a second portion of the frame 140 spaced apart from the first portion of the sidewall of the frame 140. The housing manufacturing method may further comprise arranging the cover 102 and the frame 140 such that the third waterproof member 312 attached to the second portion of the edge of the cover 102 at least partially overlays with the fourth waterproof member 322 attached to the second portion of the sidewall of the frame 140, and connecting the first waterproof member 311 and the second waterproof member 321 by filling a gap formed between the first portion of the edge of the cover 102 and the second portion of the edge of the cover 102 and filling a gap formed between the first portion of the sidewall of the frame 140 and the second portion of the sidewall of the frame 140 with an adhesive in the third waterproof member 312 and an adhesive in the fourth waterproof member 322, based on depressing the arranged frame 140 relative to the arranged cover 102.

The housing manufacturing method may further comprise disposing the first waterproof member, which includes a first substrate in a first adhesive, and the third waterproof member, which includes a third substrate in a third adhesive spaced apart from the first substrate, on a layer of the first waterproof tape. The housing manufacturing method may further comprise removing the layer of the first waterproof tape after attaching the first waterproof member and the third waterproof member on the edge of the cover through the first adhesive and the third adhesive.

The housing manufacturing method may further comprise coating the second waterproof member, which includes a second adhesive and a second substrate interposed between the second adhesive, and the fourth waterproof member, which includes a fourth adhesive and a fourth substrate interposed between the fourth adhesive and spaced apart from the second substrate, on a layer of the second waterproof tape, and removing the layer of the second waterproof tape after attaching the second waterproof member and the fourth waterproof member on the edge of the frame through the second adhesive and the fourth adhesive.

The housing manufacturing method may further comprise filling a portion of the third adhesive and a portion of the fourth adhesive in a space between the first substrate and the third substrate and the fourth substrate by pressing the cover of the housing and the frame of the housing. The housing manufacturing method may further comprise filling another portion of the third adhesive and another portion of the fourth adhesive in a space between the second substrate and the third substrate and the fourth substrate.

The housing manufacturing method may further comprise connecting the first waterproof tape and the second waterproof tape to each other by pressing the cover of the housing and the frame of the housing against each other.

The housing manufacturing method may further comprise the second adhesive flowing, by pressing the cover of the housing and the frame of the housing, into a space between the first substrate of the second waterproof tape and the second substrate of the first waterproof tape and a space between the first substrate of the second waterproof tape and the second substrate of the second waterproof tape.

The first adhesive may overlap a portion of the second adhesive as a surface of the cover of the housing coated with the first waterproof tape is disposed to face a surface of the frame of the housing coated with the second waterproof tape.

A ratio of the first substrate in the first waterproof member may be larger than a ratio of the second substrate in the second waterproof member.

According to an embodiment, a housing manufacturing method may comprise coating a first waterproof member on a base material of a first waterproof tape, and the first waterproof member may include a first adhesive and a first substrate embedded in the first adhesive. The housing manufacturing method may comprise coating a second waterproof member on the base material of the first waterproof tape such that the second waterproof member is positioned adjacent to the first waterproof member, and the second waterproof member may include a second adhesive and a second substrate embedded in the second adhesive. The housing manufacturing method may further comprise coating the first waterproof member on a base material of a second waterproof tape. The housing manufacturing method may further comprise coating the second waterproof member on the base material of the second waterproof tape such that the second waterproof member is positioned adjacent to the first waterproof member. The housing manufacturing method may further comprise forming the second waterproof tape by cutting the base material of the second waterproof tape coated with the first waterproof member and the second waterproof member.

The housing manufacturing method may comprise attaching the first waterproof tape along a portion of an edge portion of a cover of the housing. The housing manufacturing method may comprise attaching the second waterproof tape along a portion of an edge portion of a frame of the housing. The housing manufacturing method may further comprise disposing a surface of the cover of the housing coated with the first waterproof tape to face a surface of the frame of the housing coated with the second waterproof tape such that a portion of the edge portion of the frame of the housing is adjacent to a portion of the edge portion of the cover of the housing. The housing manufacturing method may further comprise pressing the cover of the housing and the frame of the housing against each other such that the second adhesive flows into a space between the first substrate of the first waterproof tape and the second substrate of the first waterproof tape and a space between the first substrate of the first waterproof tape and the second substrate of the second waterproof tape.

The effects obtainable from the present disclosure are not limited to those mentioned above, and other effects not mentioned herein may be clearly understood by those having ordinary skill in the art to which the present disclosure belongs.

FIG. 11 is a block diagram illustrating an electronic device 1101 in a network environment 1100 according to various embodiments.

Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module (SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to an embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, an HDMI connector, a USB connector, an SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to an embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 1164dB or less) for implementing mMTC, or U-plane latency (e.g., 0.5ms or less for each of downlink (DL) and uplink (UL), or a round trip of 11ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semipermanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a cover defining a rear side of the electronic device;
a frame supporting the cover; and
waterproof members, disposed along an edge portion of the cover, attaching the cover and the frame;
wherein the waterproof members include:
a first waterproof member including:
a first adhesive; and
a first substrate interposed between the first adhesive;
a second waterproof member, spaced apart from the first waterproof member, including:
a second adhesive; and
a second substrate interposed between the second adhesive; and
a third waterproof member connecting the first waterproof member and the second waterproof member, including:
a third adhesive contacting the first adhesive and the second adhesive; and
a third substrate, interposed between the third adhesive, spaced apart from the first substrate and the second substrate.

2. The electronic device of claim 1, wherein the third substrate is narrower than the first substrate or the second substrate.

3. The electronic device of claim 1 or 2, wherein a ratio of the third adhesive in the third waterproof member is larger than a ratio of the first adhesive in the first waterproof member or a ratio of the second adhesive in the second waterproof member.

4. The electronic device of any one of claims 1 to 3, wherein the third waterproof member connects the first waterproof member and the second waterproof member such that the waterproof members form a closed curve.

5. The electronic device of any one of claims 1 to 4, further comprising a battery disposed within an internal space defined by the cover and the frame,
wherein the third waterproof member is disposed on an edge portion of the cover disposed alongside the battery.

6. The electronic device of any one of claims 1 to 5, wherein the third waterproof member further includes a fourth substrate embedded in the third adhesive,
wherein the fourth substrate overlays with the third substrate and is spaced apart from the first substrate and the second substrate.

7. The electronic device of claim 6, wherein a distance between the third substrate and the first substrate is different from a distance between the fourth substrate and the first substrate, and
wherein the distance between the third substrate and the first substrate is different from a distance between the third substrate and the second substrate.

8. The electronic device of any one of claims 1 to 7, wherein a ratio of the third substrate in the third waterproof member is from 20% to 40%.

9. The electronic device of any one of claims 1 to 8, wherein the waterproof members limit foreign substances from entering from an outside of the electronic device via a gap between the frame and the cover.

10. The electronic device of any one of claims 1 to 9, wherein the third adhesive flows from the third substrate toward the first substrate and the second substrate by compression between the cover and the frame.

11. The electronic device of any one of claims 1 to 10, wherein a corner of the first substrate facing the third substrate is parallel to a corner of the third substrate facing the first substrate.

12. The electronic device of any one of claims 1 to 11, wherein a distance between the first substrate and the third substrate is different from a distance between the second substrate and the third substrate.

13. The electronic device of any one of claims 1 to 12, wherein the first waterproof member extends along a first corner of the cover and a portion of a second corner of the cover, the second corner of the cover connected to the first corner of the cover,
wherein the second waterproof member extends along another portion of the second corner, toward an end portion of the first waterproof member.

14. The electronic device of claim 13, further comprising a fourth waterproof member spaced apart from another end portion of the first waterproof member,
wherein the first waterproof member extends along a portion of a third corner of the cover, the third corner of the cover connected to the first corner of the cover,
wherein the fourth waterproof member extends along another portion of the third corner, toward another end portion of the first waterproof member and the fourth waterproof member includes a fourth adhesive and a fourth substrate interposed between the fourth adhesive.
wherein the electronic device further comprises a fifth waterproof member connecting the first waterproof member and the fourth waterproof member, and
wherein the fifth waterproof member includes:
a fifth adhesive contacting the first adhesive and the fourth adhesive, and
a fifth substrate, interposed between the fifth adhesive, spaced apart from the first substrate and the fourth substrate.

15. A housing manufacturing method comprising:
attaching a first waterproof member, a second waterproof member, a third waterproof member, and a fourth waterproof member of a first waterproof tape and a second waterproof tape to corresponding portions of a cover and a frame, the attaching including:
attaching the first waterproof member of the first waterproof tape to a first portion of an edge of the cover,
attaching the third waterproof member of the first waterproof tape to a second portion of the edge of the cover, wherein the second portion of the edge of the cover is spaced apart from the first portion of the edge of the cover,
attaching the second waterproof member of the second waterproof tape to a first portion of a sidewall of the frame, and
attaching the fourth waterproof member of the second waterproof tape to a second portion of the frame, wherein the second portion of the frame is spaced apart from the first portion of the sidewall of the frame,
arranging the cover and the frame, such that the third waterproof member attached to the second portion of the edge of the cover at least partially overlays with the fourth waterproof member attached to the second portion of the sidewall of the frame, and
connecting the first waterproof member and the second waterproof member by filling a gap formed between the first portion of the edge of the cover and the second portion of the edge of the cover and filling a gap formed between the first portion of the sidewall of the frame and the second portion of the sidewall of the frame with an adhesive in the third waterproof member and an adhesive in the fourth waterproof member, based on depressing the arranged frame relative to the arranged cover.
